# EUROPÄISCHE PATENTSCHRIFT

(11) **EP 1 888 665 B1**
(45) Veröffentlichungstag und Bekanntmachung des Hinweises auf die Patenterteilung: **25.08.2010**
(21) Anmeldenummer: 06754155.7
(22) Anmeldetag: 06.06.2006
(51) Int. Cl.: C08G 18/28, C08K 5/548, C08K 5/5419, C08K 5/544

(54) **SILAN-MODIFIZIERTE HARNSTOFF-DERIVATE, VERFAHREN ZU IHRER HERSTELLUNG UND DEREN VERWENDUNG ALS RHEOLOGIEHILFSMITTEL**
SILANE-MODIFIED UREA DERIVATIVES, METHOD FOR THE PRODUCTION THEREOF, AND USE THEREOF AS AUXILIARY RHEOLOGICAL AGENTS
DERIVES DE CARBAMIDE MODIFIES PAR DU SILANE, LEUR PROCEDE DE PRODUCTION ET LEUR UTILISATION COMME AGENT AUXILIAIRE DE RHEOLOGIE

(30) Priorität: 07.06.2005 DE 102005026085
(43) Veröffentlichungstag der Anmeldung: 20.02.2008
(73) Patentinhaber: Construction Research & Technology GmbH, 83308 Trostberg (DE)
(72) Erfinder: AUSTERMANN, Tobias, 49811 Lingen (DE); DUETSCH, Michael, 83278 Traunstein (DE); LAURENT, Marc, 77850 Hericy (FR); MACK, Helmut, 83278 Traunstein (DE); PORSCH, Michael, St. Louis Park, MN 5516 (US); WERNTHALER, Konrad, Minnetonka, MN 55345 (US)
(74) Vertreter: Dey, Michael
(86) Internationale Anmeldenummer: PCT/EP2006/005385
(87) Internationale Veröffentlichungsnummer: WO 2006/131314

(56) Entgegenhaltungen:
- EP-A- 0 498 442
- US-A- 4 456 718

## Beschreibung

Die vorliegende Erfindung betrifft Silan-modifizierte Verbindungen Verfahren zu ihrer Herstellung sowie ihre Verwendung als Rheologiehilfsmittel, d.h. als Mittel zur Veränderung der rheologischen Eigenschaften von Stoffen, vorzugsweise als Thixotropiermittel für Silan-vemetzende Systeme, d.h. als Verdickungsmittel oder Mittel zum Erhalten von thixotropen Eigenschaftgen von Stoffen, insbesondere für einkomponentige und zweikomponentige Kleb- und Dichtstoffe, Farben, Lacke und Beschichtungen.

Thixotropiermittel werden bei der Herstellung von standfesten fließfähigen Produkten eingesetzt. Als Thixotropiermittel werden oft anorganische Füllstoffe wie z. B. Ruß, Flammkieselsäure oder auch Fällungskieselsäure verwendet. Bei diesen Stoffen erfolgt allerdings eine Erhöhung der Viskosität, was insbesondere bei der Maschinenverarbeitung der Produkte von Nachteil ist.

Es können auch organische Thixotropiermittel werden verwendet werden, z. B. mikrokristalline Polyamidwachse (Crayvallac^{®}, Disparlon^{®}), hydrolysierte Rizinusöle oder Harnstoff-Derivate. Harnstoff-Derivate werden üblicherweise in einem reaktiven Trägermaterial wie beispielsweise Polyetherpolyol oder in einem nicht-reaktiven Trägermaterial, z. B. Weichmacher hergestellt. Bevorzugt werden Harnstoff-Derivate als Pasten eingesetzt, z. B. in klassischen 1 K-und 2K-Polyurethanprodukten (DE-OS 18 05 693). Bevorzugt wird hier eine aromatische, monomere Diisocyanatverbindung wie z. B. MDI = 4,4'-Diphenylmethylendiisocyanat mit einer aliphatischen Aminverbindung, wie z. B. n-Butylamin möglichst stöchiometrisch umgesetzt. Da die Additionsreaktion äußerst exotherm ist, werden die Harnstoff-Derivate unmittelbar nach dem Vermischen der Komponenten in Form eines Feststoffs im Trägermaterial ausgebildet. Eine genaue Prozessführung ist für eine gleich bleibende Produktqualität von entscheidender Bedeutung.

Die Thixotropiermittel des Standes der Technik weisen jedoch Nachteile auf, wie z. B. Eine geringe Lichtstabilität sowie eine unerwünschte Erhöhung der Viskosität.

Der vorliegenden Erfindung lag die Aufgabe zugrunde, neue Rheologiehilfsmittel bereitzustellen, welche die Nachteile des Standes der Technik zumindest teilweise überwinden und verbesserte anwendungstechnische Eigenschaften, insbesondere bezüglich der Lichtstabilität und Viskositätsstabilität besitzen.

Diese Aufgabe wurde erfindungsgemäß durch Silan-modifizierte Verbindungen der allgemeinen Formel (I) 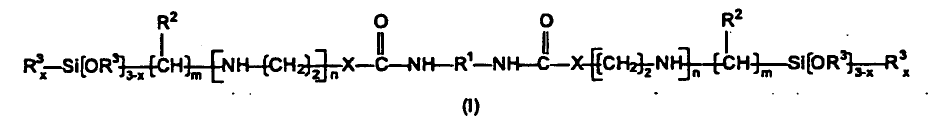 gelöst.

In obiger Formel (I) bedeutet X jeweils unabhängig NR⁴, S oder O.

R⁴ steht für einen C₁-C₄-Alkyl-Rest, beispielsweise Methyl, Ethyl oder Propyl, oder für einen C₆-C₂₀-Aryl-Rest, insbesondere einen C₆-C₂₀-Aryl-Rest, z. B. Phenyl oder Naphthyl.

R¹ kann ein C₁-C₁₂Alkylen-Rest sein, insbesondere ein C₁-C₆-Alkylen-Rest, der linear oder verzweigt sein kann, beispielsweise Ethylen oder Propylen, oder ein C₆-C₂₀-Cycloalkylen-Rest, insbesondere ein C₁-C₁₀-Cycloalkylen-Rest, der ggf. ungesättigt ist und somit eine oder mehrere Doppelbindungen aufweisen kann. Außerdem kann R¹ ein C₆-C₂₀-Arylen-Rest sein, insbesondere ein C₆-C₁₀-Arylen-Rest, der ggf. noch C₁-C₄-Alkyl-Substituenten, beispielsweise Methyl, Ethyl oder Propyl, aufweisen können. R¹ kann auch -C₆H₄-CH₂-C₆H₄- bedeuten.

R² kann in der allgemeinen Formel (I) jeweils unabhängig für H oder einen C₁-C₄-Alkyl-Rest stehen, beispielsweise Methyl, Ethyl oder Propyl.

R³ bedeutet jeweils unabhängig einen C₁-C₂₀-Alkyl-Rest, vorzugsweise einen C₁-C₄-Alkyl-Rest, beispielsweise Methyl, Ethyl oder Propyl, oder einen C₆-C₂₀-Aryl-Rest, insbesondere einen C₆-C₁₂Aryl-Rest, vorzugsweise Phenyl oder Naphthyl.

Außerdem ist m 1 oder 3, n ist 0 bis 10, vorzugsweise 0 bis 5 und insbesondere 0 bis 2, und x ist 0 bis 2, vorzugsweise 0 bis 1.

Es hat sich überraschenderweise gezeigt, dass die erfindungsgemäßen Silanmodifizierten Verbindungen hervorragend als Rheologiehilfsmittel und insbesondere Thixotropiermittel verwendet werden können und sich vor allem dadurch auszeichnen, dass sie nur eine sehr geringe bzw. im Wesentlichen keine Viskositätserhöhung verursachen und keinen Anlass für ein Ausschwitzen bzw. für Migrieren durch Flüssigkeitsbildung geben.

Die erfindungsgemäßes Silan-modifizierten Verbindungen zeichnen sich als Rheologiehilfsmittel bzw. Thixotropiermittel weiter dadurch aus, dass sie nicht verfärben, reaktiv sind und die Mechanik bzw. die mechanischen Eigenschaften positiv beeinflussen.

Zudem können die erfindungsgemäßen Sitan-modifizierten Verbindungen problemlos technisch hergestellt und gehandhabt werden. Außerdem ist eine Aktivierung der erfindungsgemäßen Thixotropiermittel, welche lichtstabil und reaktiv sind, z. B. durch Wärmeeintrag oder Scherkräfte, nicht erforderlich. Aufgrund ihrer hervorragenden anwendungstechnischen Eigenschaften eignen sich die erfindungsgemäßen Silan-modifizierten Verbindungen besonders für den großtechnischen Einsatz.

Die erfindungsgemäßen Silan-modifizierten Verbindungen lassen sich sehr einfach aus den entsprechenden aromatischen und/oder aliphatischen Diisocyanaten der allgemeinen Formel (11)

OCN-R¹-NCO (II)

mit einer Silan-Verbindung der allgemeinen Formel (III) 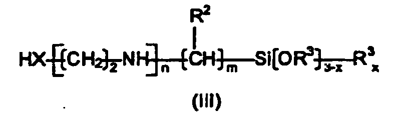 wobei X, R¹, R², R³, m, n und x oben genannte Bedeutung besitzen.

Als bevorzugte Diisocyanate können beilspielsweise aromatische Verbindungen, wie z. B. Toluylen-2,4-diisocyanat und Isomere davon (TDI) oder Diphenylmethan-4,4'-diisocyanat und Isomere davon (MDI) sowie aliphatische oder cycloaliphatische Diisocyanate, wie z. B. 3-Isocyanatomethyl-3,5,5-trimethylcyclohexylisocyanat (IPDI), Dicyclohexylmethan-4,4'-diisocyanat und Isomere (H12MDI), Hexamethylendiisocyanat (HDI) und 2,2,4-Trimethythexamethylendiisocyanat und 2,4,4-Trimethylhexamethylendiisocyanat (TMDI) eingesetzt werden.

Bevorzugt wird als Silan-Verbindung wird ein primäres Aminosilan der allgemeinen Formel (IV) 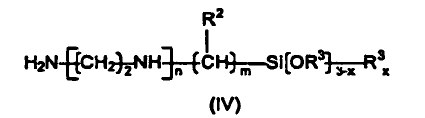 eingesetzt, wobei R², R³, m, n und x oben genannte Bedeutung besitzen. N-beta-aminoethyl-gamma-propyltrimethoxysilan (DS DAMO), gamma-Aminopropyltriethoxysilan (DS AMEO), gamma-Aminopropyltrimethoxysilan (DS AMMO) und/oder gamma-Aminopropylmethyldiethoxysilan (DS 1505) werden bevorzugt verwendet. Es können jedoch auch beliebige oligomere Aminosilane eingesetzt werden, wie z. B. ein oligomeres diaminofunktionelles Silan (DS 1146).

In einer weiteren Ausführungsform der vorliegenden Erfindung wird als Silan-Verbindung ein sekundäres Aminosilan der allgemeinen Formel (V) 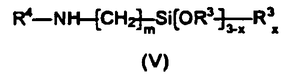 verwendet, wobei R³, R⁴, m und x oben genannte Bedeutung besitzen. Ein Beispiel für ein bevorzugtes sekundäres Aminosilan der Formel (V) ist Aminobutyl-gamma-propyltrimethoxysilan (DS 1189).

In einer weiteren Ausführungsform der vorliegenden Erfindung werden sekundäre Aminosilane der allgemeinen Formel (VI) 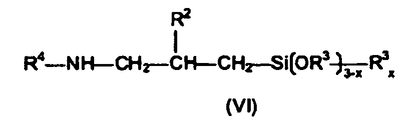 eingesetzt, wobei R², R⁴ und x oben genannte Bedeutung besitzen. Ein Beispiel für ein bevorzugtes sekundäres Aminosilan der Formel (VI) ist N-Ethylaminoisobutyltrimethoxysilan (Silquest A-Link 15), erhältlich von der Firma GE Silicones.

In einer weiteren Ausführungsform der vorliegenden Erfindung wird als Silan-Verbindung ein Mercaptosilan der allgemeinen Formel (VII) 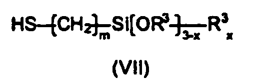 verwendet, wobei R³, m und x oben genannte Bedeutung besitzen. Bevorzugte Mercaptosilane sind z.B. 3-Mercaptopropyltrimethoxysilan (DS MTMO) und oligomere Mercaptosilane.

Weiterhin kann als Silanverbindung ein Hydroxylsilan verwendet werden, beispielsweise ein Sulfonsäuresilan, insbesondere HOSO₂-CH₂-CH₂-CH₂-Si (OR)₃).

Die Umsetzung des Diisocyanats der allgemeinen Formel (II) mit der Silan-Verbindung der allgemeinen Formel (III) erfolgt üblicherweise bei Temperaturen von etwa 0 bis etwa 100 °C, bevorzugt von etwa 20 bis etwa 80 °C, insbesondere von etwa 40 bis etwa 60 °C. Bevorzugt ist die Temperatur < 50 °C.

In einer besonders bevorzugten Ausführungsform der vorliegenden Erfindung wird die Umsetzung in Gegenwart eines Trägermaterials und ggf. eines Wasserfängers durchgeführt. Das Trägermaterial kann aus einer reaktiven oder einer nicht-reaktiven Verbindung bestehen.

Als nicht-reaktive Trägermaterialien werden bevorzugt Verbindungen, ausgewählt aus der Gruppe bestehend aus langkettigen Polymeren, z. B. Silikonen oder Polyolen, insbesondere endverschlossenen Polyole, Estern, beispielsweise Adipaten, Sebazaten oder Biodiesel, alkylierten Benzolen, Phthalaten, aliphatischen und/oder aromatischen Kohlenwasserstoffen sowie Mischungen davon eingesetzt.

Als reaktive Trägermaterialien werden bevorzugt silylierte Polymere auf Basis von Polyethern, Polyurethanen, Polysulfiden, Silikonen, Acrylaten, Methacrylaten oder beliebige Mischungen davon eingesetzt. Beispiele für reaktive Trägermaterialien sind silylierte Polyole, z. B. hergestellt aus Isocyanatosilanen und Polyetherpolyolen, oder Polyole, insbesondere auf Basis von Polyethern, blockierte Isocyanat-Polymere (wie in Progress in Organic Coatings, 3 (1979), Seite 73 bis 99 und Progress in Organic Coatings, 9 (1981), Seite 2 bis 28 beschrieben), silylierte Polymere, beispielsweise MS Polymer, MAX Polymer, XMAP, CRX Polymer von Kaneka, Excestar von Asahi Glass Chemical, Desmoseal der Firma Bayer, Polymer ST der Firma Hanse-Chemie, WXP der Firma Witton, welche in EP 0 355 426 A1, US 3,627,722 B1, DE 40 29 505 A1, US 5,364,955 B1, EP 0 918 062 A1, US 5,910,555 B1) beschrieben sind, und/oder Acrylat-Gruppen enthaltende Polymere, welche z. B. durch Umsetzung von Prepolymeren, die Isocyanat-Gruppen enthalten, mit Hydroxyethyl(meth)acrylat hergestellt werden können, was in EP 0 675 144 beschrieben ist. Es können selbstverständlich auch beliebige Mischungen aus den oben beschriebenen Trägermaterialien verwendet werden.

Erfindungsgemäß können zudem geeignete Wasserfänger verwendet werden, wie z. B. Vinylsilane, CaO, Zeolithe, Kieselsäureester, Alkylsilane sowie Mischungen davon. Überraschenderweise wurde festgestellt, dass durch Verwendung von Wasserfängem die Lagerstabilität der erfindungsgemäßen Silan-modifizierten Harnstoff-Derivate im Trägermaterial weiter erhöht wird.

Die Konzentration der Wasserfänger kann in weiten Grenzen variiert werden, doch hat es sich als besonders vorteilhaft erwiesen, diese Konzentration auf 0,01 bis 40 Gew.-%, vorzugsweise 0,1 bis 10 Gew.-% und besonders bevorzugt auf 0,2 bis 5 Gew.%, einzustellen, bezogen auf das Gesamtgewicht von Trägermaterial und Harnstoff-Derivat.

Die Konzentration der Silan-modifizierten Verbindung im Trägermaterial beträgt vorzugsweise etwa 5 bis etwa 90 Gew.-%, insbesondere etwa 10 bis etwa 60 Gew.% und besonders bevorzugt etwa 15 bis etwa 50 Gew.-%.

In einer bevorzugten Ausführungsform wird die erfindungsgemäße Silan-modifizierte Verbindung in Gegenwart eines Bindemittels hergestellt. Auf diese Weise kann sichergestellt werden, dass die reaktive Silan-modifizierte Verbindung nach der Vernetzung des Bindemittels, welches bevorzugt Silan-modifziert ist, in die Polymermatrix eingebaut bzw. damit verwoben wird. Die Verbindung beeinflusst in dieser Ausführungsform die Mechanik bzw. die mechanischen Eigenschaften positiv und diffundiert nicht mehr aus dem gehärteten Material aus.

Die Herstellung der erfindungsgemäßen Silan-modifizierten Verbindung kann auch extern, d.h. getrennt vom Bindemittel erfolgen, wobei es dem Bindemittel als Additiv, bevorzugt in Form einer Paste zugegeben werden kann.

Ein weiterer Gegenstand der vorliegenden Erfindung ist die Verwendung der Silan-modifizierten Verbindungen als Rheologiehiffsmittel, insbesondere als Thixotropiermittel. Bevorzugt erfolgt die Verwendung bei ein- oder zweikomponentigen härtbaren Polymersystemen, insbesondere bei 1K-und 2K-Kleb- und Dichtstoffen. Farben, Lacken und Beschichtungen. Vorzugsweise handelt es sich hierbei um ein zweikomponentiges System, das durch Vermischung eines Bindemittels, beispielsweise einer Harzkomponente, mit einem Härter vernetzt wird. Die Harzkomponente enthält eine oder mehrere reaktive Gruppen, wie z.B. Acrytat-, Epoxid-, Isocyanat-, Silan-, Mercapto-, Hydroxylgruppen. Als Härter können z. B. Amino-, Hydroxyl-, Silan- und/oder Schwefelgruppen-haltige Verbindungen, Starter zur Initiierung einer Polymerisation von Doppelbindungen, Wasser, Katalysatoren und/oder Metalloxide verwendet werden.

Das vernetzbare System kann auch ein einkomponentiges System sein, welches bevorzugt entweder thermisch, z.B. durch Hitze, mittels Ultraschall, mit Wasser aus der Umgebungsfeuchte bzw. durch Einwirkung von Strahlen wie etwa UV-Strahlen härtbar ist.

Die erfindungsgemäßen Silan-modifizierten Verbindungen liegen im Bindemittel, d.h. in der Harzkomponente, bevorzugt in einer Konzentration von etwa 0,1 bis etwa 80 Gew.-%, vorzugsweise etwa 2 bis etwa 50 Gew.-% und besonders bevorzugt etwa 5 bis etwa 30 Gew.-%, vor.

Die erfindungsgemäße Verbindung kann bereits in situ im Bindemittel enthalten sein, es kann jedoch auch separat als Additiv in pastöser Form dem Bindemittel zusammen mit den anderen Additiven, beispielsweise Füllstoffe, Weichmacher, Haftvermittler, Trockenmittel, Lösungsmittel, Katalysatoren und/oder UV-Stabilisatoren, zugegeben werden.

Die nachfolgenden Beispiele dienen zu weiteren Erläuterung der die Erfindung.

### Beispiele

### Herstellung der erfindungsgemäßen Silan-modifizierten Verbindungen

### 1. Externe Herstellung

60 g Phthalatweichmacher (Jayflex DIUP) werden in einem Gefäß zusammen mit 13,12 g Diisocyanat (Vestanat H12MDI, MG 262,35) vorgelegt. Dann werden portionsweise 22,14 g Aminosilan (Dynasylan AMEO, MG 221) über einen Zeitraum von 30 Minuten unter inniger Vermischung zugegeben. Die Temperatur soll 50 °C nicht überschreiten. Es wird eine farblose, milchig-trübe, geruchlose, hochviskose Paste erhalten. Der Restisocyanatgehalt ist Null gemäß Titration nach ASTM D 1638 sowie nach IR Spektroskopie. Abschließend werden 0,5 Gew.-% Wasserfänger (Dynasylan VTMO) zugegeben.

Die so erhaltene Paste wird als Additiv in ein silyliertes Polyurethanpräpolymer (Polymer ST-67 der Hanse-Chemie) eingebracht und mit Füllstoffen und weiteren Additiven zu einem Dichtstoff formuliert.

### 2. In situ-Herstellung im Bindemittel

60 g eines silylierten Polyurethanpräpolymers (Polymer ST-67 der Hanse-Chemie) werden zusammen mit 6,55 g Diisocyanat (Vestanat H12MDI) und 13,05 g Phthalatweichmacher (Jayflex DIUP) in einer Mischdose vorgelegt. Dann werden portionsweise 8,94 g Aminosilan (Dynasylan AMMO, MG 179) über einen Zeitraum von 15 Minuten unter inniger Vermischung und Rühren zugegeben. Der Restisocyanatgehalt ist Null gemäß Titration nach ASTM D 1638 sowie nach IR Spektroskopie. Direkt im Anschluss wird das so erhaltene Bindemittel mit Füllstoffen und weiteren Additiven zu einem Dichtstoff formuliert.

### 3. Anwendungsbeispiel

Die Formulierung wurde in einem Labormischer Molteni Labmax durchgeführt. Das Fließverhalten der fertig formulierten Dichtstoffe wurde mittels einer Materialprüfmaschine Typ Zwick Z2.5/TN 1 S als Auspresskraft mit einer 3 mm Düse bei 23 °C ermittelt. Die mechanischen Eigenschaften wurden mit ausgestanzten Normprüfkörpern ermittelt.
a) Additivzugabe des gemäß Beispiel 1 hergestellten Thixotropiermittels

| | |
|---|---|
| erfindungsgemäßes Thixotropiermittel [g] | 200 |
| silyliertes Bindemittel ST-67, Hanse [g] | 200 |
| Füllstoff Kreide BLR2, Omya [g] | 350 |
| Weichmacher Phthalat DIUP, Exxon [g] | 50 |
| UV Absorber Tinuvin 327, Ciba [g] | 2 |
| Zinnkatalysator DBTL, Rohm + Haas [g] | 4 |
| Wasserfänger Dynsylan VTMO, Degussa [g] | 6 |
| | |
| Homogenität nach Formulierung | sehr gut, pastös weich |
| Auspresskraft, frisch [N] | 720 |
| Auspresskraft, 1 Woche bei 60°C [N] | 770 |
| Hautbildungszeit [min] | 80 |
| Zugfestigkeit [MPa] | 2,9 |
| Lagerstabilität, 4 Wochen bei 60 °C | in Ordnung |

b) *In situ*-Herstellung des gemäß Beispiel 2 hergestellten Thixotropiermittels

| | |
|---|---|
| erfindungsgemäßes Thixotropiermittel im | |
| silylierten Bindemittel ST-67, Hanse [g] | 400 |
| Füllstoff Kreide BLR2, Omya [g] | 350 |
| Weichmacher Phthalat DIUP, Exxon [g] | 50 |
| UV Absorber Tinuvin 327, Ciba [g] | 2 |
| Zinnkatalysator DBTL, Rohm + Haas [g] | 4 |
| Wasserfänger Dynsylan VTMO, Degussa [g] | 6 |
| | |
| Homogenität nach Formulierung | sehr gut, pastös weich |
| Auspresskraft, frisch [N] | 510 |
| Auspresskraft, 1 Woche bei 60 °C [N] | 550 |
| Hautbildungszeit [min] | 90 |
| Zugfestigkeit [MPa] | 2,3 |
| Lagerstabilität, 4 Wochen bei 60°C | in Ordnung |

## Patentansprüche

1. Silan-modifizierte Verbindung der allgemeinen Formel (I) 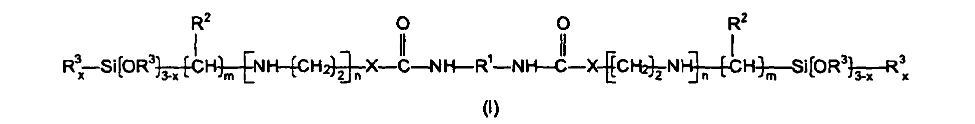 worin
X jeweils unabhängig NR⁴, S, O bedeutet,
R¹ einen C₁-C₂-Alkylen-Rest, der linear oder verzweigt sein kann, einen C₆-C₂₀-Cycloalkylen-Rest, der ggf. ungesättigt sein kann, einen C₆-C₂₀-Arylen-Rest, der ggf. einen oder mehrere C₁-C₄-Alkyl-Substituenten aufweist, oder -C₆H₄-CH₂-C₆H₄- bedeutet,
R² jeweils unabhängig H oder einen C₁-C₄-Alkyl-Rest bedeutet,
R³ jeweils unabhängig einen C₁-C₂₀-Alkyl- oder C₆-C₂₀-Aryl-Rest bedeutet,
R⁴ einen C₁-C₄-Alkyl- oder C₆-C₂₀-Aryl-Rest bedeutet,
m 1 oder 3 bedeutet,
n 0 bis 10 bedeutet und
x 0 bis 2 bedeutet.

2. Silan-modifizierte Verbindung nach Anspruch 1, **dadurch gekennzeichnet, dass** n 0 bis 2 und x 0 bis 1 bedeutet.

3. Silan-modifizierte Verbindung nach Anspruch 1 oder 2, **dadurch gekennzeichnet, dass** R³ einen C₁-C₄-Alkyl- oder Phenyl-Rest bedeutet.

4. Verfahren zur Herstellung einer Silan-modifizierten Verbindung der allgemeinen Formel (I) 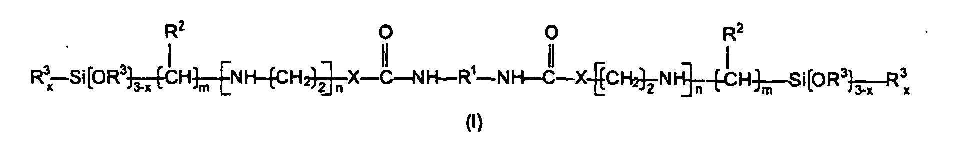 durch Umsetzen eines Diisocyanats der allgemeinen Formel (11)
OCN-R¹-NCO (II)
mit einer Silan-Verbindung der allgemeinen Formel (III), 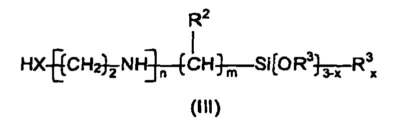 bei Temperaturen von 0 bis 100 °C, wobei
X jeweils unabhängig NR⁴, S, O bedeutet,
R¹ einen C₁-C₁₂-Alkylen-Rest, der linear oder verzweigt sein kann, einen C₆-C₂₀-Cycloalkylen-Rest, der ggf. ungesättigt sein kann, einen C₆-C₂₀-Arylen-Rest, der ggf. einen oder mehrere C₁-C₄-Alkyl-Substituenten aufweist, oder -C₆H₄-CH₂-C₆H₄- bedeutet,
R² jeweils unabhängig H oder einen C₁-C₄-Alkyl-Rest bedeutet,
R³ jeweils unabhängig einen C₁-C₂₀-Alkyl- oder C₆-C₂₀-Aryl-Rest bedeutet, R⁴ Wasserstoff, einen C₁-C₄-Alkyl- oder C₆-C₂₀-Aryl-Rest bedeutet,
m 1 oder 3 bedeutet,
n 0 bis 10 bedeutet und
x 0 bis 2 bedeutet.

5. Verfahren nach Anspruch 4, **dadurch gekennzeichnet, dass** als Silan-Verbindung ein primäres Aminosilan der allgemeinen Formel (IV) 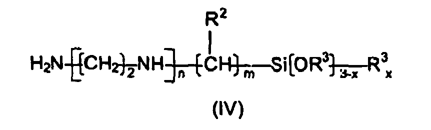 verwendet wird, wobei R², R³, m, n und x oben genannte Bedeutung besitzen.

6. Verfahren nach Anspruch 4, **dadurch gekennzeichnet, dass** als Silan-Verbindung ein sekundäres Aminosilan der allgemeinen Formel (V) 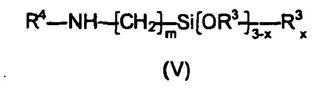 verwendet wird, wobei R³, R⁴, m und x oben genannte Bedeutung besitzen.

7. Verfahren nach Anspruch 4, **dadurch gekennzeichnet, dass** als Silan-Verbindung ein sekundäres Aminosilan der allgemeinen Formel (VI) 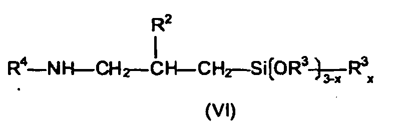 verwendet wird, wobei R², R⁴ und x oben genannte Bedeutung besitzen.

8. Verfahren nach Anspruch 4, **dadurch gekennzeichnet, dass** als Silan-Verbindung ein Mercaptosilan der allgemeinen Formel (VII) 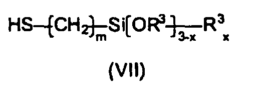 verwendet wird, wobei R³, m und x oben genannte Bedeutung besitzen.

9. Verfahren nach einem der Ansprüche 1 bis 8, **dadurch gekennzeichnet, dass** die Umsetzung des Diisocyanats mit der Silan-Verbindung in Gegenwart eines Trägermaterials und ggf. eines Wasserfängers durchführt wird.

10. Verfahren nach Anspruch 9, **dadurch gekennzeichnet, dass** ein nichtreaktives Trägermaterial, ausgewählt aus der Gruppe langkettiger Polymere, wie z. B. Silikone oder Polyole, Ester, alkylierte Benzole, Phthalate, aliphatische Kohlenwasserstoffe, aromatische Kohlenwasserstoffe oder Mischungen davon verwendet wird.

11. Verfahren nach Anspruch 9, **dadurch gekennzeichnet, dass** als reaktives Trägermaterial silylierte Polymere auf Basis von Polyethern, Polyurethanen, Polysulfiden, Silikonen, Acrylaten, Methacrylaten oder Mischungen davon verwendet wird.

12. Verfahren nach einem der Ansprüche 9 bis 11, **dadurch gekennzeichnet, dass** als Wasserfänger Vinylsilane, CaO, Zeolithe, Kieselsäureester, Alkylsilane sowie Mischungen davon verwendet werden.

13. Verfahren nach einem der Ansprüche 9 bis 12, **dadurch gekennzeichnet, dass** der Wasserfänger in einer Konzentration von 0,01 bis 40 Gew.-%, vorzugsweise 0,1 bis 10 Gew.-% und besonders bevorzugt 0,2 bis 5 Gew.-% vorliegt, bezogen auf das Gesamtgewicht von Trägermaterial und Harnstoff-Derivat.

14. Verfahren nach einem der Ansprüche 9 bis 13, **dadurch gekennzeichnet, dass** die Silan-modifizierte Verbindung im Trägermaterial in einer Konzentration von 5 bis 90 Gew.-%, insbesondere 10 bis 60 Gew.-% und besonders bevorzugt 15 bis 50 Gew.-%, vorliegt.

15. Verfahren nach einem der Ansprüche 4 bis 14, **dadurch gekennzeichnet, dass** die Silan-modifizierte Verbindung in Gegenwart des Bindemittels hergestellt wird.

16. Verwendung einer Silan-modifizierten Verbindung der allgemeinen Formel (I) 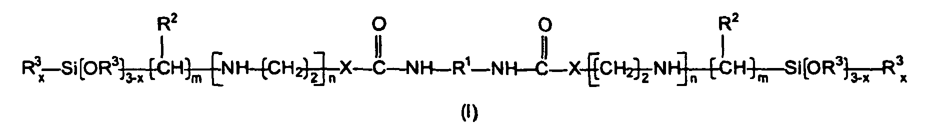 worin
X jeweils unabhängig NR⁴, S, O bedeutet,
R¹ einen C₁-C₁₂-Alkylen-Rest, der linear oder verzweigt sein kann, einen C₆-C₂₀-Cycloalkylen-Rest, der ggf. ungesättigt sein kann, einen C₆-C₂₀-Arylen-Rest, der ggf. einen oder mehrere C₁-C₄-Alkyl-Substituenten aufweist, oder -C₆H₄-CH₂-C₆H₄- bedeutet,
R² jeweils unabhängig H oder einen C₁-C₄-Alkyl-Rest bedeutet,
R³ jeweils unabhängig einen C₁-C₂₀-Alkyl- oder C₆-C₂₀-Aryl-Rest bedeutet,
R⁴ Wasserstoff, einen C₁-C₄-Alkyl- oder C₆-C₂₀-Aryl-Rest bedeutet,
m 1 oder 3 bedeutet,
n 0 bis 10 bedeutet und
x 0 bis 2 bedeutet,
als Rheologiehilfsmittel, insbesondere Thixotropiermittel, für ein- oder zweikomponentige härtbare Polymersysteme.

17. Verwendung nach Anspruch 16, **dadurch gekennzeichnet, dass** die Silan-modifizierte Verbindung im Bindemittel in einer Konzentration von 0,1 bis 80 Gew.-%, vorzugsweise 2 bis 50 Gew.-% und besonders bevorzugt 5 bis 30 Gew.-%, vorliegt.

18. Verwendung nach Anspruch 16 oder 17, **dadurch gekennzeichnet, dass** die Silan-modifizierte Verbindung *in situ* im Bindemittel enthalten ist.

19. Verwendung nach einem der Ansprüche 16 bis 18, **dadurch gekennzeichnet, dass** die Silan-modifizierte Verbindung als Additiv in pastöser Form dem Bindemittel zusammen mit den anderen Additiven, umfassend Füllstoffe, Weichmacher, Haftvermittler, Trockenmittel, Lösungsmittel, Katalysatoren und UV-Stabilisatoren, zugegeben wird.

## Claims

1. A silane-modified compound of the general formula (I) 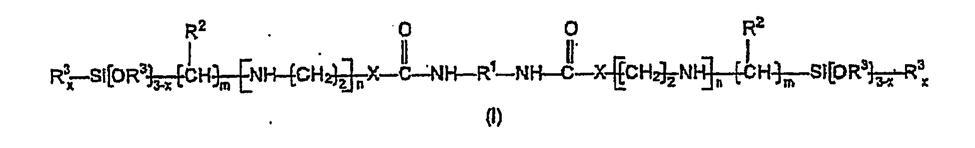 in which
X, in each case independently, signifies NR⁴, S, 0,
R¹ signifies a C₁-C₁₂-alkylene radical which may be linear or branched, a C₆-C₂₀-cycloalkylene radical which optionally may be unsaturated, a C₆-C₂₀-arylene radical which optionally has one or more C₁-C₄-alkyl substituents, or -C₆H₄-CH₂-C₆H₄-,
R², in each case independently, signifies H or a C₁-C₄-alkyl radical,
R³, in each case independently, signifies a C₁-C₂₀-alkyl or C₆-C₂₀-aryl radical,
R⁴ signifies a C₁-C₄-alkyl or C₆-C₂₀-aryl radical,
m signifies 1 or 3,
n signifies 0 to 10 and
x signifies 0 to 2.

2. A silane-modified compound according to claim 1, **characterised in that** n signifies 0 to 2 and x signifies 0 to 1.

3. A silane-modified compound according to claim 1 or 2, **characterised in that** R³ signifies a C₁-C₄-alkyl or phenyl radical.

4. A process for the preparation of a silane-modified compound of the general formula (I) 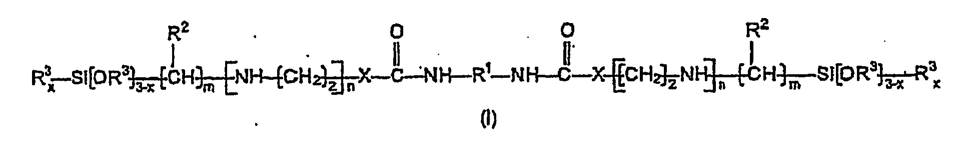 by reacting a diisocyanate of the general formula (II)
OCN-R¹-CO (II)
with a silane compound of the general formula (III), 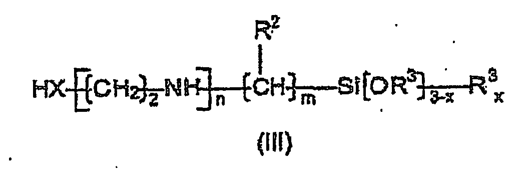 at temperatures of from 0 to 100EC, in which
X, in each case independently, signifies NR⁴, S, 0,
R¹ signifies a C₁-C₁₂-alkylene radical which may be linear or branched, a C₆-C₂₀-cycloalkylene radical which optionally may be unsaturated, a C₆-C₂₀-arylene radical which optionally has one or more C₁-C₄-alkyl substituents, or -C₆H₄-CH₂-C₆H₄-,
R², in each case independently, signifies H or a C₁-C₄-alkyl radical,
R³, in each case independently, signifies a C₁-C₂₀-alkyl or C₆-C₂₀-aryl radical,
R⁴ signifies hydrogen, a C₁-C₄-alkyl or C₆-C₂₀-aryl radical,
m signifies 1 or 3,
n signifies 0 to 10 and
x signifies 0 to 2.

5. A process according to claim 4, **characterised in that** the silane compound used is a primary aminosilane of the general formula (IV) 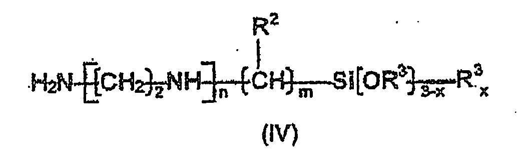 in which R², R³, m, n and x have the above-mentioned meaning.

6. A process according to claim 4, **characterised in that** the silane compound used is a secondary aminosilane of the general formula (V) 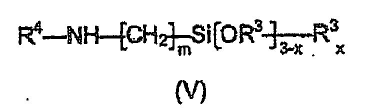 in which R³, R⁴, m and x have the above-mentioned meaning.

7. A process according to claim 4, **characterised in that** the silane compound used is a secondary aminosilane of the general formula (VI) 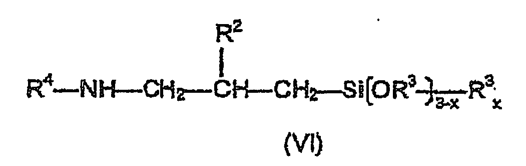 n which R², R⁴ and x have the above-mentioned meaning.

8. A process according to claim 4, **characterised in that** the silane compound used is a mercaptosilane of the general formula (VII) 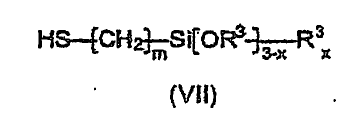 in which R³, m and x have the above-mentioned meaning.

9. A process according to any one of claims 1 to 8, **characterised in that** the reaction of the diisocyanate with the silane compound is carried out in the presence of a carrier material and optionally of a water scavenger.

10. A process according to claim 9, **characterised in that** an unreactive carrier material selected from the group consisting of long-chain polymers, for example silicones or polyols, esters, alkylated benzenes, phthalates, aliphatic hydrocarbons, aromatic hydrocarbons or mixtures thereof is used.

11. A process according to claim 9, **characterised in that** silylated polymers based on polyethers, polyurethanes, polysulphides, silicones, acrylates, methacrylates or mixtures thereof are used as reactive carrier material.

12. A process according to any one of claims 9 to 11, **characterised in that** vinyl silanes, CaO, zeolites, silicic acid esters, alkyl silanes and mixtures thereof are used as water scavengers.

13. A process according to any one of claims 9 to 12, **characterised in that** the water scavenger is present in a concentration of 0.01 to 40% by weight, preferably 0.1 to 10% by weight and particularly preferably 0.2 to 5% by weight, based on the total weight of carrier material and urea derivative.

14. A process according to any one of claims 9 to 13, **characterised in that** the silane-modified compound is present in the carrier material in a concentration of from 5 to 90% by weight, in particular 10 to 60% by weight and particularly preferably 15 to 50% by weight.

15. A process according to any one of claims 4 to 14, **characterised in that** the silane-modified compound is prepared in the presence of the binder.

16. Use of a silane-modified compound of the general formula (I) 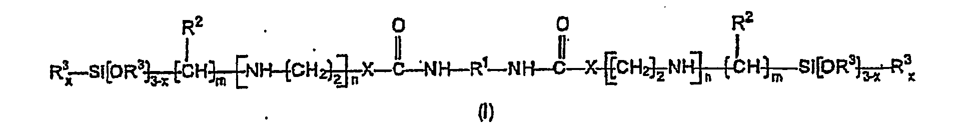 in which
X, in each case independently, signifies NR⁴, S, 0,
R¹ signifies a C₁-C₁₂-alkylene radical which may be linear or branched, a C₆-C₂₀-cycloalkylene radical which optionally may be unsaturated, a C₆-C₂₀-arylene radical which optionally has one or more C₁-C₄-alkyl substituents, or -C₆H₄-CH₂-C₆H₄-,
R², in each case independently, signifies H or a C₁-C₄-alkyl radical,
R³, in each case independently, signifies a C₁-C₂₀-alkyl or C₆-C₂₀-aryl radical,
R⁴ signifies hydrogen, a C₁-C₄-alkyl or C₆-C₂₀-aryl radical,
m dignifies 1 or 3,
n signifies 0 to 10 and
x signifies 0 to 2,
as a rheology auxiliary agent, in particular thixotropic agent, for 1 or 2-component curable polymer systems.

17. Use according to claim 16, **characterised in that** the silane-modified compound is present in the binder in a concentration of 0.1 to 80% by weight, preferably 2 to 50% by weight and particularly preferably from 5 to 30% by weight.

18. Use according to claim 16 or 17, **characterised in that** the silane-modified compound is present in situ in the binder.

19. Use according to any one of claims 16 to 18, **characterised in that** the silane-modified compound is added as an additive in pasty form to the binder together with the other additives, comprising fillers, plasticisers, adhesion promoters, drying agents, solvents, catalysts and UV stabilisers.

## Revendications

1. Composé modifié par un silane de formule générale (I) 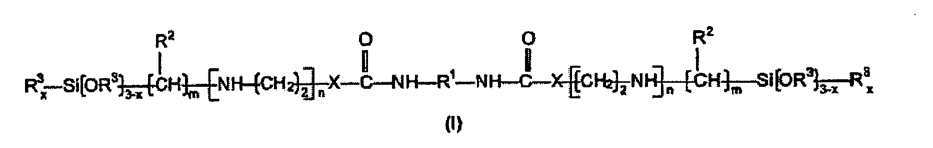 dans laquelle
X désigne indépendamment, respectivement, NR⁴, S, O,
R¹ désigne un radical alkylène en C₁ à C₁₂ qui peut être linéaire ou ramifié, un radical cycloalkylène en C₆ à C₂₀ qui peut éventuellement être insaturé, un radical arylène en C₆ à C₂₀ qui présente éventuellement un ou plusieurs substituants alkyle en C₁ à C₄ ou -C₆H₄-CH₂-C₆H₄-,
R² désigne respectivement, indépendamment H ou un radical alkyle en C₁ à C₄,
R³ désigne respectivement, indépendamment un radical alkyle en C₁ à C₂₀ ou aryle en C₆ à C₂₀,
R⁴ désigne un radical alkyle en C₁ à C₄ ou aryle en C₆ à C₂₀,
m vaut 1 ou 3,
n vaut 0 à 10 et
x vaut 0 à 2.

2. Composé modifié par un silane selon la revendication 1, **caractérisé en ce que** n vaut 0 à 2 et x vaut 0 à 1.

3. Composé modifié par un silane selon la revendication 1 ou 2, **caractérisé en ce que** R³ désigne un radical alkyle en C₁ à C₄ ou phényle.

4. Procédé de production d'un composé modifié par un silane de formule générale (I) 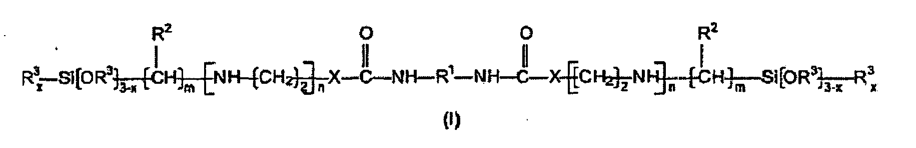 par réaction d'un diisocyanate de formule générale (II)
OCN-R¹-NCO (II)
avec un composé de silane de formule générale (III) 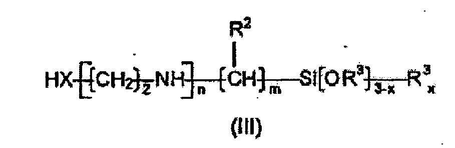 à des températures de 0 à 100 °C, dans laquelle
X désigne respectivement, indépendamment NR⁴, S, O,
R¹ désigne un radical alkylène en C₁ à C₁₂ qui peut être linéaire ou ramifié, un radical cycloalkylène en C₆ à C₂₀ qui peut éventuellement être insaturé, un radical arylène en C₆ à C₂₀ qui présente éventuellement un ou plusieurs substituants alkyle en C₁ à C₄ ou -C₆H₄-CH₂-C₆H₄-,
R² désigne respectivement, indépendamment H ou un radical alkyle en C₁ à C₄,
R³ désigne respectivement, indépendamment un radical alkyle en C₁ à C₂₀ ou aryle en C₆ à C₂₀,
R⁴ désigne un atome d'hydrogène, un radical alkyle en C₁ à C₄ ou aryle en C₆ à C₂₀, m vaut 1 ou 3,
n vaut 0 à 10 et
x vaut 0 à 2.

5. Procédé selon la revendication 4, **caractérisé en ce que** l'on utilise comme composé de silane, un aminosilane primaire de formule générale (IV) 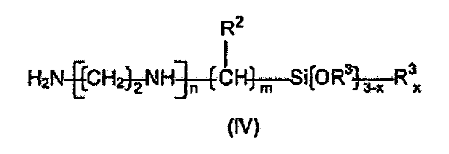 dans laquelle R², R³, m, n et x ont la signification mentionnée ci-dessus.

6. Procédé selon la revendication 4, **caractérisé en ce que** l'on utilise comme composé de silane, un aminosilane secondaire de formule générale (V) 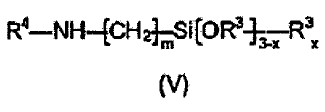 dans laquelle R³, R⁴, m et x ont la signification mentionnée ci-dessus.

7. Procédé selon la revendication 4, **caractérisé en ce que** l'on utilise comme composé de silane, un aminosilane secondaire de formule générale (VI) 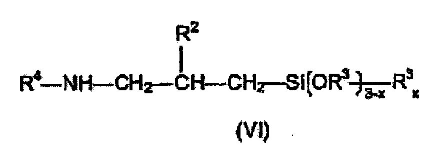 dans laquelle R², R⁴ et x ont la signification mentionnée ci-dessus.

8. Procédé selon la revendication 4, **caractérisé en ce que** l'on utilise comme composé de silane, un mercaptosilane de formule générale (VII) 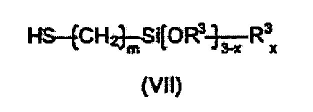 dans laquelle R³, m et x ont la signification mentionnée ci-dessus.

9. Procédé selon l'une des revendications 1 à 8, **caractérisé en ce que** la réaction du diisocyanate avec le composé de silane est réalisée en présence d'un matériau substrat et éventuellement d'un piégeur d'eau.

10. Procédé selon la revendication 9, **caractérisé en ce que** l'on utilise un matériau substrat non réactif choisi dans le groupe des polymères à longue chaîne tels que les silicones ou polyols, les esters, benzènes alkylés, phtalates, hydrocarbures aliphatiques, hydrocarbures aromatiques ou leurs mélanges.

11. Procédé selon la revendication 9, **caractérisé en ce que** l'on utilise comme matériau substrat réactif, des polymères silylés à base de polyéthers, de polyuréthanes, de polysulfures, de silicones, d'acrylates, de méthacrylates ou leurs mélanges.

12. Procédé selon l'une des revendications 9 à 11, **caractérisé en ce que** l'on utilise comme piégeur d'eau, des vinylsilanes, CaO, des zéolithes, des esters d'acide silicique, des alkylsilane et leurs mélanges.

13. Procédé selon l'une des revendications 9 à 12, **caractérisé en ce que** le piégeur d'eau se présente en une concentration de 0,01 à 40 % en poids, de préférence de 0,1 à 10 % en poids et de manière particulièrement préférée, de 0,2 à 5 % en poids, par rapport au poids total du matériau substrat et un dérivé d'urée.

14. Procédé selon l'une des revendications 9 à 13, **caractérisé en ce que** le composé modifié par un silane dans le matériau substrat se présente en une concentration de 5 à 90 % en poids, en particulier de 10 à 60 % en poids et de manière particulièrement préférée, de 15 à 50 % en poids.

15. Procédé selon l'une des revendications 4 à 14, **caractérisé en ce que** le composé modifié par un silane est produit en présence du liant.

16. Utilisation d'un composé modifié par un silane de formule générale (I) 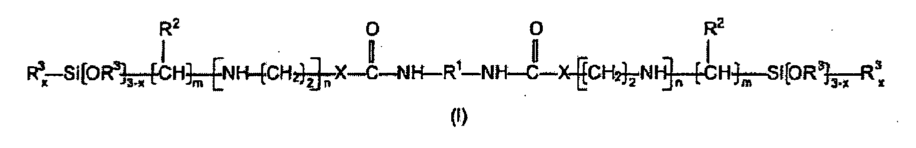 dans laquelle
X désigne respectivement, indépendamment NR⁴, S, O,
R¹ désigne un radical alkylène en C₁ à C₁₂ qui peut être linéaire ou ramifié, un radical cycloalkylène en C₆ à C₂₀ qui peut éventuellement être insaturé, un radical arylène en C₆ à C₂₀ qui présente éventuellement un ou plusieurs substituants alkyle en C₁ à C₄ ou -C₆H₄-CH₂-C₆H₄-,
R² désigne respectivement, indépendamment H ou un radical alkyle en C₁ à C₄,
R³ désigne respectivement, indépendamment un radical alkyle en C₁ à C₂₀ ou aryle en C₆ à C₂₀,
R⁴ désigne un atome d'hydrogène, un radical alkyle en C₁ à C₄ ou aryle en C₆ à C₂₀,
m vaut 1 ou 3,
n vaut 0 à 10 et
x vaut 0 à 2,
comme auxiliaire de rhéologie, en particulier comme agent thixotrope pour des systèmes de polymères durcissables à un ou deux composants.

17. Utilisation selon la revendication 16, **caractérisée en ce que** le composé modifié par un silane se présente dans le liant en une concentration de 0,1 à 80 % en poids, de préférence, 2 à 50 % en poids et de manière particulièrement préférée, 5 à 30 % en poids.

18. Utilisation selon la revendication 16 ou 17, **caractérisée en ce que** le composé modifié par un silane est contenu *in situ* dans le liant.

19. Utilisation selon l'une des revendications 16 à 18, **caractérisée en ce que** le composé modifié par un silane est ajouté en tant qu'additif sous forme pâteuse au liant, conjointement avec les autres additifs, comprenant des agents de charge, des plastifiants, des agents adhésifs, des agents déshydratants, des solvants, des catalyseurs et des stabilisants UT.
